# FASCICULE DE BREVET EUROPEEN

(11) **EP 4 115 654 B1**
(45) Date de publication et mention de la délivrance du brevet: **24.12.2025**
(21) Numéro de dépôt: 21708273.4
(22) Date de dépôt: 27.01.2021
(51) Int. Cl.: H04W 52/02

(54) **PROCÉDÉ ET DISPOSITIF DE COMMUNICATION ENTRE UN VÉHICULE ET UN RÉSEAU MOBILE TERRESTRE PUBLIC**
VERFAHREN UND VORRICHTUNG ZUR KOMMUNIKATION ZWISCHEN EINEM FAHRZEUG UND EINEM ÖFFENTLICHEN LANDFUNKNETZ
METHOD AND DEVICE FOR COMMUNICATION BETWEEN A VEHICLE AND A PUBLIC LAND MOBILE NETWORK

(30) Priorité: 04.03.2020 FR 2002170
(43) Date de publication de la demande: 11.01.2023
(73) Titulaire: Stellantis Auto SAS, 78300 Poissy (FR)
(72) Inventeur: KHAN, Sharique, 91400 ORSAY (FR); FROMION, Alexandre, 92160 ANTONY (FR)
(74) Mandataire: ESIP
(86) Numéro de dépôt international: PCT/FR2021/050146
(87) Numéro de publication internationale: WO 2021/176150

(56) Documents cités:
- WO-A1-2018/225990
- GB-A- 2 558 898

## Description

### Domaine technique

L'invention concerne un procédé et un dispositif de communication entre un véhicule et un réseau mobile terrestre public, par exemple un réseau cellulaire 4G ou 5G. L'invention concerne également un procédé et un dispositif d'optimisation de la consommation d'énergie pour le maintien d'une connexion entre le véhicule et le réseau pendant une durée déterminée.

### Arrière-plan technologique

Les véhicules contemporains embarquent un ou plusieurs dispositifs nécessitant le maintien d'une connexion avec un réseau, par exemple un réseau cellulaire sans fil. Ces dispositifs correspondent par exemple à des calculateurs, aussi appelés UCE (« Unité de Commande Electronique » ou en anglais ECU « Electronic Control Unit »), ou à des unités de contrôle télématique, dites TCU (de l'anglais « Telematic Control Unit »). Les calculateurs embarquent par exemple un ou plusieurs logiciels qui sont exécutés pour assurer les fonctions dont ils ont la charge. Des mises à jour de ces logiciels sont parfois nécessaires, par exemple pour améliorer une fonction ou pour corriger une erreur, aussi appelée « bug » en informatique. Ces calculateurs ou ces unités permettent également la remontée d'informations vers des serveurs, services d'urgence ou encore des centres de données des constructeurs ou fabriquant de pièces automobiles.

Ces échanges de données sont par exemple réalisés par voie aérienne, selon une technologie appelée OTA (de l'anglais « over-the-air », ou en français « par voie aérienne ») pour le téléchargement des mises à jour. Cette technologie s'appuie sur un ou plusieurs réseaux mobiles terrestres publics de la même manière que toutes les communications cellulaires.

Les communications établies entre un véhicule et le réseau sont consommatrices d'énergie, notamment au niveau du véhicule dont l'énergie électrique est fournie par une ou plusieurs batteries. La quantité d'énergie électrique disponible dans le véhicule est limitée, notamment lorsque le véhicule est dans une situation dans laquelle la batterie ne se recharge pas.

Le maintien des communications entre le véhicule et le réseau peut ainsi épuiser la quantité d'énergie disponible dans le véhicule, ce qui peut s'avérer problématique lorsque par exemple le véhicule n'est pas utilisé pendant une longue période et que la batterie du véhicule ne peut pas être rechargée.

WO 2018/225990 A1 divulgue un procédé de contrôle du mode de fonctionnement d'un dispositif électronique pour économiser de l'énergie, le procédé étant mis en œuvre par un serveur dans un réseau de communication sans fil.

### Résumé de l'invention

Un objet de la présente invention est d'optimiser les communications entre un véhicule et un réseau mobile terrestre.

Un autre objet de la présente invention est d'optimiser la consommation d'énergie par le véhicule en assurant le maintien d'une connexion avec le réseau mobile terrestre.

Selon un premier aspect, l'invention concerne un procédé de communication entre un système de communication d'un véhicule et un réseau mobile terrestre public, le véhicule étant statique dans une cellule du réseau, le procédé étant mis en œuvre par le réseau, le procédé comprenant les étapes suivantes :
- réception d'une première information représentative de consommation électrique du véhicule ;
- réception d'une deuxième information représentative d'une quantité d'électricité disponible dans le véhicule ;
- réception d'une troisième information représentative d'un objectif de maintien d'une connexion entre le système de communication et le réseau pendant une durée déterminée ;
- détermination d'au moins un mode d'économie d'énergie à allouer au système de communication du véhicule en fonction de la première information, la deuxième information et la troisième information ;
- transmission, à destination du système de communication du véhicule, d'une instruction de passage à le au moins un mode d'économie d'énergie déterminé.

La détermination d'au moins un mode d'économie d'énergie comprend une sélection d'un profil d'économie d'énergie parmi une pluralité de profils d'économie d'énergie, à chaque profil de ladite pluralité étant associé un ensemble d'applications et/ou de services à maintenir en activité avec un ensemble de paramètres de communication associés, ledit ensemble de paramètres de communication comprenant : - une fréquence d'échanges de données ; et/ou - une taille de paquets de données.

Selon une variante, la détermination d'au moins un mode d'économie d'énergie comprend une sélection d'un mécanisme de mise en sommeil du système de communication du véhicule à intervalle régulier de durée déterminée parmi une pluralité de mécanismes supportés par le réseau.

Selon une autre variante, la pluralité de mécanismes comprend :
- un mécanisme de mode d'économie d'énergie, dit PSM ;
- un mécanisme de réception discontinue, dit DRX ;
- un mécanisme de réception discontinue étendue, dit eDRX ;
- un mécanisme de réception continue en mode connecté, dit CDRX.

Selon une variante supplémentaire, la pluralité de profils d'économie d'énergie comprend un profil pour lequel uniquement un ou plusieurs services d'urgence sont maintenus en activité.

Selon une autre variante, la sélection d'un profil d'économie d'énergie est fonction d'une image virtuelle du système de communication dudit véhicule enregistrée dans le réseau.

Selon un deuxième aspect, l'invention concerne un dispositif du réseau mobile terrestre public configuré pour communiquer avec un système de communication d'un véhicule, le dispositif comprenant une mémoire associée à un processeur configuré pour la mise en œuvre des étapes du procédé selon le premier aspect de l'invention.

Selon un troisième aspect, l'invention concerne un système de communication comprenant un dispositif tel que décrit ci-dessus selon le deuxième aspect de l'invention et au moins un véhicule relié au réseau mobile terrestre public via une liaison sans fil.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

### Brève description des figures

D'autres caractéristiques et avantages de l'invention ressortiront de la description des modes de réalisation non limitatifs de l'invention ci-après, en référence aux figures 1 à 3 annexées, sur lesquelles :
[Fig. 1] illustre de façon schématique un environnement de communication entre un véhicule et une infrastructure de réseau mobile terrestre public, selon un exemple de réalisation particulier de la présente invention ;
[Fig. 2] illustre schématiquement un dispositif de communication du réseau de la figure 1, selon un exemple de réalisation particulier de la présente invention ;
[Fig. 3] illustre un organigramme des différentes étapes d'un procédé de communication entre le véhicule de la figure 1 et le réseau mobile terrestre public de la figure 1, selon un exemple de réalisation particulier de la présente invention.

### Description des modes de réalisation

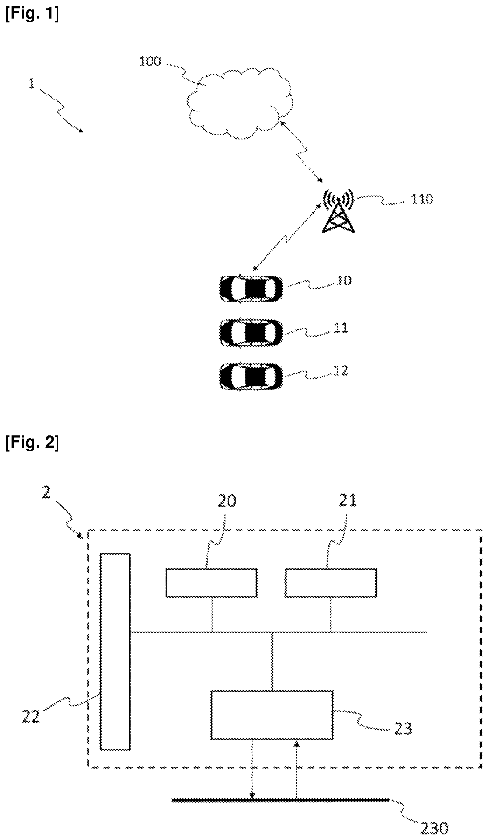

Un procédé et un dispositif de communication entre un système de communication d'un véhicule et un réseau mobile terrestre public vont maintenant être décrits dans ce qui va suivre en référence conjointement aux figures 1 à 3. Des mêmes éléments sont identifiés avec des mêmes signes de référence tout au long de la description qui va suivre.

Selon un exemple particulier et non limitatif de réalisation de l'invention, un procédé de communication entre un système de communication d'un véhicule et un réseau mobile terrestre public comprend la réception d'une première information représentative de la consommation électrique courante du véhicule, d'une deuxième information représentative d'une quantité d'électricité disponible dans le véhicule, par exemple dans la batterie du véhicule, et d'une troisième information représentative de l'objectif de durée pendant laquelle le véhicule souhaite rester en connexion avec le réseau. Sur la base de la première information, deuxième information et troisième information, le réseau détermine quel mode d'économie d'énergie doit être alloué au système de communication du véhicule pour que ce dernier puisse conserver une connexion avec le réseau pendant la durée souhaitée. Le réseau transmet alors au véhicule dans quel mode d'économie d'énergie le système de communication doit passer.

La communication au réseau par le véhicule d'informations relatives à sa consommation d'énergie, ses ressources en énergie et ses objectifs en termes de durée de connexion permet au réseau de mettre en places les mécanismes adaptés pour satisfaire les souhaits du véhicule en termes de maintien de connexion. Cela permet d'optimiser les ressources d'énergie disponibles au niveau du véhicule pour maintenir une connexion avec le réseau.

Bien que la description ci-dessous soit relative à un procédé et un dispositif de communication entre un système de communication d'un véhicule et un réseau mobile terrestre public, l'invention ne se limite pas à un tel exemple de mise en œuvre. L'invention s'étend à un procédé et un dispositif de communication entre tout dispositif de communication mobile (par exemple un téléphone intelligent (de l'anglais « smartphone »), une tablette, un objet connecté) et tout réseau mobile.

[Fig. 1] illustre schématiquement un environnement de communication 1 entre un véhicule 10 et une infrastructure de réseau mobile terrestre public, selon un exemple de réalisation particulier et non limitatif de la présente invention.

La figure 1 illustre un véhicule 10 stationné, par exemple sur une place de stationnement d'un parking ou d'un garage, et communiquant avec un ou plusieurs serveurs distants ou le « cloud » 100 (ou en français « nuage ») au travers d'un ou plusieurs équipements de communication 110 de type antenne relais de réseau cellulaire, formant une partie de l'infrastructure du réseau mobile terrestre public. Le réseau mobile terrestre public correspond avantageusement à un réseau de type cellulaire, par exemple un réseau 3GPP (de l'anglais « 3^{rd} Generation Partnership Project » ou en français « Projet de partenariat de 3^{ème} génération ») de quatrième génération ou de cinquième génération, dit 3GPP 4G ou 5G, respectivement.

Le véhicule 10 fait par exemple partie d'un ensemble de véhicules 10, 11, 12 à l'arrêt pour une durée déterminée, par exemple quelques jours, semaines ou mois.

Le véhicule 10 comprend notamment un système de communication alimenté en énergie électrique par une batterie d'une capacité déterminée. Le système de communication comprend par exemple un dispositif de communication, par exemple une TCU, relié à un ou plusieurs calculateurs du système embarqué du véhicule 10. Ce ou ces calculateurs correspondent par exemple à des calculateurs remontant des données (par exemple issus de capteurs du véhicule 10) vers un ou plusieurs serveurs du « cloud » 100 via une connexion sans fil conforme au standard LTE (de l'anglais « Long-Term Evolution » ou en français « Evolution à long terme »), LTE-Advanced (ou en français LTE-avancé) ou 3GPP 5G et/ou recevant des données de ce ou ces serveurs.

La quantité d'électricité correspond à une grandeur qui est exprimée en ampère-heure (noté Ah, qui est une unité de charge électrique, 1 Ah correspondant à la quantité d'électricité traversant une section d'un conducteur parcouru par un courant d'intensité de 1 ampère pendant 1 heure). La quantité d'énergie électrique correspond à une grandeur qui est exprimée en watt-heure (ou kilowatt-heure, noté kWh, 1 kWh correspondant à la quantité d'énergie consommée par un appareil de 1000 watts pendant 1 heure). Il est possible de passer d'une unité à l'autre en utilisant par exemple la tension nominale V aux bornes de la batterie du véhicule 10, avec Ah * V => Wh.

L'état de charge de la batterie, dit SOC (de l'anglais « State of Charge ») ou la profondeur de décharge, dit DOD (de l'anglais « Depth of Discharge »), indiquent le niveau de charge de la batterie. Une telle information est par exemple obtenue par l'intermédiaire d'un système BMS (de l'anglais « Battery Management System » ou en français « Système de contrôle des batteries ») associé à la batterie ou par un calculateur recevant les paramètres de la batterie permettant d'établir le SOC.

Les éléments formant le système de communication sont par exemple reliés entre eux via un réseau filaire, par exemple un réseau de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802.3).

Le véhicule 10 est avantageusement statique, ou quasi statique, dans une cellule du réseau mobile avec lequel une ou plusieurs communications sont établies. La cellule correspond à une zone de couverture géographique d'une antenne de communication (aussi appelée station de base), par exemple l'antenne 110, permettant d'établir des communications radio entre le véhicule 10 et l'infrastructure réseau du réseau mobile.

Selon un exemple particulier de réalisation, le réseau mobile est un réseau de type 3GPP 5G. Selon cet exemple, le réseau est découpé en tranches de réseau, sur la base de technologies de type SDN (de l'anglais « Software-Defined Networking » ou en français « Réseau défini de manière logicielle ») et/ou NFV (de l'anglais « Network Function Virtualization » ou en français « Virtualisation de fonction réseau »). Une tranche de réseau (de l'anglais « network slice ») correspond à une forme d'architecture de réseau virtuel, c'est-à-dire à une instance logique du réseau mobile terrestre. La découpe d'un réseau en tranches permet la création de plusieurs réseau virtuels sur une infrastructure physique partagée commune. Chaque tranche de réseau se voit allouer un ensemble de ressources dédiées par l'opérateur du réseau pour une utilisation spécifique par un client donné (par exemple un équipementier automobile) ou pour un dispositif particulier, par exemple pour le système de communication du véhicule 10. Une telle découpe du réseau mobile terrestre public 3GPP 5G est par exemple décrite et définie dans le document de spécification intitulé « 5G; System Architecture for the 5G System », référencé ETSI TS 123 501 version 15.2.0 et publié en juin 2018. Selon une variante, le véhicule 10 accède à une ou plusieurs tranches du réseau pour accéder aux services associés à ces tranches de réseau, un service déterminé étant associée à une tranche de réseau. Chaque tranche de réseau correspond à un réseau virtuel de bout en bout, c'est-à-dire du véhicule 10 à la machine, physique ou virtuelle, du « cloud » 100 fournissant le service associé.

Dans une première opération, une première information représentative de la consommation électrique courante du véhicule 10, une deuxième information représentative d'une quantité d'électricité disponible dans le véhicule 10 et une troisième information représentative d'un objectif de maintien d'une connexion entre le système de communication du véhicule 10 et le réseau pendant une durée déterminée sont reçues par le réseau, par exemple par un ou plusieurs serveurs du « cloud » 100. Ces informations sont transmises par le véhicule 10 via une liaison sans fil, par exemple sur requête du réseau, ou à l'initiative du système de communication du véhicule 10, de manière périodique ou apériodique. La liaison sans fil est une liaison de type OTA par exemple et conforme à un standard de communication sans fil, par exemple conforme au standard LTE, LTE-Advance ou 3GPP 5G.

La première information correspond par exemple à la quantité d'électricité fournie par la batterie à un instant donné, cette première information étant par exemple obtenue du système BMS associé à la batterie.

La deuxième information correspond par exemple à la quantité d'électricité restante dans la batterie à l'instant où la première information a été fournie, cette deuxième information correspondant par exemple à l'état de charge SOC ou à la profondeur de décharge DOD obtenue par exemple du système BMS associé à la batterie.

La troisième information correspond par exemple à la durée (exprimée par exemple en heures ou en jours) pendant laquelle le véhicule 10 souhaite que les communications avec le réseau mobile soient maintenues. Cette troisième information correspond par exemple à une durée déterminée en fonction de l'environnement et de la situation dans laquelle se trouve le véhicule. Cette durée est par exemple prédéterminée, c'est-à-dire stockée en mémoire du système de communication. Selon une variante, cette durée est une valeur paramétrable, par exemple une valeur entrée par un utilisateur du véhicule via une interface homme-machine, dite IHM.

Dans une deuxième opération, le réseau détermine un ou plusieurs modes d'économie d'énergie à allouer au système de communication du véhicule 10 en fonction des première, deuxième et troisième informations reçues.

Selon un premier exemple de réalisation particulier, un premier mode d'économie d'énergie correspondant à un mécanisme de mise en sommeil du système de communication du véhicule 10 est déterminé. Ce mécanisme alloué aux communications entre le système de communication du véhicule 10 et le réseau est avantageusement sélectionné dans une liste de mécanismes disponibles et compatibles avec le standard de communication du réseau mobile (par exemple LTE, LTE-Advanced ou 3GPP 5G). Le mécanisme est sélectionné en fonction des paramètres fournis par le véhicule 10 et correspondant aux première, deuxième et troisième informations reçues. Le mécanisme sélectionné correspond par exemple à un des mécanismes suivants :
- mécanisme PSM (de l'anglais « Power Saving Mode » ou en français « Mode d'économie d'énergie ») : ce mécanisme permet d'éteindre la radio du système radio du véhicule 10 pour une période prolongée ; selon ce mécanisme, le système radio reste à l'écoute du canal de « paging » (ou « télé-avertissement » en français) une fois entré dans un état de repos ou de veille pendant un temps actif déterminé caractérisé par un temporisateur nommé T3324 ; une fois ce temporisateur écoulé, le système radio du véhicule 10 n'est plus joignable par le réseau ou le « cloud » 100 puisque la radio du système radio est désactivée pendant une durée correspondant au temporisateur nommé T3412 ; les temporisateurs T3324 et T3412 sont par exemple déterminés par le réseau ou le « cloud » 100 ;
- mécanisme DRX (de l'anglais « Discontinuous Reception » ou en français « Réception discontinue ») : ce mécanisme permet d'éteindre la radio du système radio du véhicule 10 pour la rallumer périodiquement afin de monitorer le canal PDCCH (de l'anglais « Physical Downlink Control Channel » ou en français « canal de commande physique descendant »), selon un cycle appelé cycle DRX qui correspond à une période pendant laquelle le module radio est au repos (« DRX sleep » en anglais) alternée d'une période d'activité « DRX Active State » en anglais) ; les valeurs du cycle DRX varient entre 2 ms et 640 ms, avec la valeur de la période d'activité comprise entre 1 et 200 ms ;
- mécanisme eDRX (de l'anglais « Extended Discontinuous Reception » ou en français « Réception discontinue étendue ») : ce mécanisme correspond à un mode étendu du mécanisme DRX, c'est-à-dire que la période d'inactivité du module radio peut être étendue par rapport à celle du mécanisme DRX ; selon ce mécanisme, l'intervalle de « paging » (ou « télé-avertissement » en français) peut être étendu à des valeurs comprises entre 5,12 secondes et 2621,44 secondes, c'est-à-dire que le système radio du véhicule 10 peut être dans un état de repos ou de veille pendant l'intervalle de « paging », le module radio du système radio se réveillant à chaque fin d'intervalle pour écouter le canal logique PDCCH (de l'anglais « Physical Downlink Control Channel » ou en français « canal de commande physique descendant ») sur lequel est émis le message RRC (de l'anglais « Radio Resource Control » ou en français « Contrôle de ressource radio ») de « paging » par le serveur du « cloud » 100 pour notifier le véhicule 10 que des données sont en attente de transmission à destination de son système radio ;
- mécanisme CDRX (de l'anglais « Connected Mode Discontinuous Reception » ou en français « Réception discontinue en mode connecté ») : ce mécanisme correspond à un mode connecté du mécanisme DRX, c'est-à-dire que selon le mécanisme CDRX, le cycle court DRX est optionnel et que s'il n'est pas activé seul le cycle long DRX est exécuté.

Bien entendu, les mécanismes de mise en sommeil de la liste ci-dessus sont fournis à titre d'exemple et les mécanismes de mise en sommeil du système de communication du véhicule 10 ne se limitent pas aux exemples ci-dessus.

Les exemples de la liste ci-dessus sont des mécanismes connus de l'homme du métier et conformes aux standards LTE. Ces mécanismes sont par exemple décrits dans le livre écrit par Olof Liberg et al. et intitulé « Cellular Internet of Things: from massive deployments to critical 5G ».

Selon un deuxième exemple de réalisation particulier, un deuxième mode d'économie d'énergie correspondant à un profil d'économie d'énergie alloué au système de communication du véhicule 10 est déterminé. Le profil alloué est par exemple sélectionné dans une liste de profils d'économie d'énergie déterminés. Chaque profil correspond par exemple à une liste réduite d'applications ou de services qui sont maintenus en activités, avec des paramètres de communication associés, la liste étant d'autant plus réduite que l'économie d'énergie à réaliser est importante. Le profil est avantageusement sélectionné en fonction des paramètres fournis par le véhicule 10 et correspondant aux première, deuxième et troisième informations reçues.

A titre d'exemple, la liste de profils d'économie d'énergie comprend les profils suivants, sans néanmoins se limiter aux profils listés ci-dessous :
- profil basse consommation : selon ce profil, un premier ensemble restreint d'applications restent exécutées, un deuxième ensemble restreint de services sont maintenus tels que par exemple des services de localisation du véhicule 10, des services de type « push » (ou « poussé » en français), des services d'urgence (alerte automatique d'un service de sécurité en cas d'accident ou de panne par exemple) avec des paramètres de communication associés tels qu'une fréquence basse d'échange de données entre le réseau et le véhicule 10 (par exemple toutes les 1 minute seulement) et une taille réduite des paquets de données échangés ; selon une variante, les paramètres de communication associés à chaque service ou application varient d'un service (respectivement d'une application) à un autre (respectivement à une autre) ;
- profil très basse consommation : selon ce profil, le nombre d'applications exécutées et de service maintenus est réduit par rapport au profil basse consommation, les paramètres de communication associés étant configurés pour réduire la consommation en diminuant par exemple la fréquence d'échange de données (par exemple toutes les 10 minutes seulement) et/ou en réduisant la taille des paquets de données échangés ; selon une variante, les paramètres de communication associés à chaque service ou application varient d'un service (respectivement d'une application) à un autre (respectivement à une autre) ;
- profil extrême basse consommation : selon ce profil, seules les applications ou services relatifs au(x) système(s) d'urgence sont maintenus avec une fréquence très basse d'échange de données (par exemple toutes les 30 minutes seulement) et une taille très réduite des paquets de données.

Selon une variante de réalisation, le profil le plus adapté au exigences et aux capacité du véhicule (définis par les première, deuxième et troisième informations) est déterminé par le réseau sur la base d'une image virtuelle du système de communication du véhicule 10, une telle image virtuelle correspondant par exemple à une copie des applications et services assurés par le véhicule 10, une copie des paramètres matériel (de l'anglais « hardware ») et logiciels (de l'anglais « software ») du véhicule 10 sur une tranche de réseau du « cloud » 100. Selon cette variante, le réseau ou le « cloud » est en mesure de tester les différents profils et différents paramètres de communication associés permettant de répondre à la requête du véhicule 10 en termes de durée de maintien de communication avec le réseau sur la base d'information de consommation d'électricité et d'état de charge avant de déterminer le profil optimum.

Selon un troisième exemple de réalisation, le réseau combine un mécanisme de mise en sommeil (tel que décrit selon le premier exemple de réalisation) du système de radio avec un profil d'économie d'énergie (tel que décrit selon le deuxième exemple de réalisation) pour répondre à la requête du véhicule 10 en termes de durée de maintien de communication avec le réseau sur la base d'information de consommation d'électricité et d'état de charge.

Selon une autre variante de réalisation, les premières et deuxièmes informations sont transmises périodiquement au réseau pour que le réseau puisse adapter le mécanisme de mise en sommeil et/ou le profil d'économie d'énergie à la consommation d'électricité réelle du véhicule 10 et de la quantité d'électricité réelle restante dans la batterie.

Dans une quatrième opération, le réseau, par exemple un serveur du « cloud » 100, transmet une requête à destination du véhicule 10 pour l'informer du ou des modes d'économie d'énergie qui ont été alloués au système de communication du véhicule 10 par le réseau, sur la base des première, deuxième et troisième informations.

Cette ou ces requêtes sont transmise selon la liaison sans fil de type OTA mise en œuvre pour recevoir les première, deuxième et troisième informations et échanger les données entre le « cloud » 100 et le véhicule 10.

Cette requête comprend par exemple un ensemble de paramètres de communication associés au(x) mode(s) d'économie d'énergie alloué(s) au véhicule 10 et définissant ce ou ces modes d'économie d'énergie. L'application de ces paramètres permet au véhicule d'entrer dans le ou les modes d'économie d'énergie.

Selon une variante, la ou les requêtes transmises comprennent un identifiant de chaque mode d'économie d'énergie alloué, le véhicule 10 ayant en mémoire (par exemple en mémoire d'un calculateur du système de communication du véhicule 10) une table de correspondance (ou LUT en anglais, pour « Look-Up Table ») associant chaque identifiant à un mode d'économie d'énergie et ses paramètres associés. Selon cette variante, les modes d'économie d'énergie pouvant être mis en œuvre par le système de communication du véhicule 10 sont prédéfinies et connus du véhicule 10 et du réseau.

Selon un exemple de réalisation particulier, le véhicule 10 quitte le ou les modes d'économie d'énergie alloués par le réseau, par exemple automatiquement lorsqu'une ou plusieurs des conditions ci-dessous sont remplies :
- le véhicule 10 se déplace et quitte la cellule du réseau dans laquelle il était stationné ;
- la batterie du véhicule 10 se recharge (par exemple à la suite du démarrage du moteur thermique du véhicule 10 ou à la suite d'une connexion de la batterie du véhicule 10 à une borne de recharge d'un réseau d'alimentation électrique publique ou privé) ;
- action du conducteur pour désactiver le ou les modes d'économie d'énergie via une IHM par exemple.

[Fig. 2] illustre schématiquement un dispositif 2 de communication dans un réseau mobile terrestre public, selon un exemple de réalisation particulier et non limitatif de la présente invention. Le dispositif 2 correspond par exemple à un serveur du « cloud » 100 ou à un dispositif embarqué par le véhicule 10 pour communiquer avec le réseau mobile terrestre public.

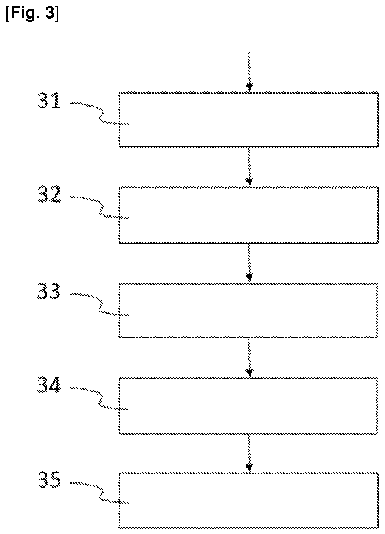

Le dispositif 2 est par exemple configuré pour la mise en œuvre des opérations décrites en regard de la figure 1 et/ou des étapes du procédé décrit en regard de la figure 3. Des exemples d'un tel dispositif 2 comprennent, sans y être limités, un serveur, un ordinateur, un dispositif de calcul, un équipement électronique embarqué tel qu'un ordinateur de bord d'un véhicule, un calculateur électronique tel qu'une UCE, une unité de contrôle télématique TCU (de l'anglais « Telematic Control Unit »), un téléphone intelligent (de l'anglais « smartphone »), une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels. Selon différents modes de réalisation particuliers, le dispositif 2 est couplé en communication avec d'autres dispositifs ou systèmes similaires, par exemple par l'intermédiaire d'un bus de communication ou au travers de ports d'entrée / sortie dédiés.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la première mémoire 21.

Selon un mode de réalisation particulier et non limitatif, le dispositif 2 comprend un bloc 22 d'éléments d'interface pour communiquer avec des dispositifs externes, par exemple un serveur distant ou le « cloud », un système de communication d'un véhicule, un calculateur, une TCU. Les éléments d'interface du bloc 22 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé), 3GPP 5G ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français).

Des données sont par exemples chargées vers le dispositif 2 via l'interface du bloc 22 en utilisant un réseau 4G (ou LTE Advanced selon 3GPP release 10 - version 10) ou 5G.

Selon un autre mode de réalisation particulier, le dispositif 2 comprend une interface de communication 23 qui permet d'établir une communication avec d'autres dispositifs, tels que par exemple le système de localisation de type GPS, le système de communication mobile (GSM, GPRS, Wi-Fi, Bluetooth, LTE, LTE-V, ITS G5)) ou les radars du système de radars via un canal de communication 230. L'interface de communication 23 correspond par exemple à un transmetteur configuré pour transmettre et recevoir des informations et/ou des données via le canal de communication 230. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), Ethernet Automotive (ou en français « Ethernet automobile »), FlexRay (selon la norme ISO 17458) ou Ethernet (selon la norme ISO/IEC 802.3).

Selon un mode de réalisation particulier supplémentaire, le dispositif 2 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 3] illustre un organigramme des différentes étapes d'un procédé de communication entre un système de communication d'un véhicule et un réseau mobile terrestre public, selon un exemple de réalisation particulier et non limitatif de la présente invention. Le procédé est avantageusement mis en œuvre dans le réseau (par exemple dans un ou plusieurs serveurs), par exemple mis en œuvre par le dispositif 2 de la figure 2.

Dans une première étape 31, une première information représentative de consommation électrique du véhicule est reçue.

Dans une deuxième étape 32, une deuxième information représentative d'une quantité d'électricité disponible dans le véhicule est reçue.

Dans une troisième étape 33, une troisième information représentative d'un objectif de maintien d'une connexion entre le système de communication et le réseau pendant une durée déterminée est reçue.

Dans une quatrième étape 34, au moins un mode d'économie d'énergie à allouer au système de communication du véhicule est déterminé en fonction de la première information, la deuxième information et la troisième information.

Dans une cinquième étape 35, une instruction de passage à le au moins un mode d'économie d'énergie déterminé est transmise à destination du système de communication du véhicule.

Selon une variante, les étapes 31 à 35 sont réitérées pour prendre en compte les variations de la consommation électrique du véhicule 10, de ses besoins et de l'évolution de la quantité d'électricité disponible.

Bien entendu, l'invention ne se limite pas aux modes de réalisation décrits ci-avant mais s'étend à un procédé de gestion de la communication entre un véhicule et un réseau, et au dispositif configuré pour la mise en œuvre d'un tel procédé. L'invention concerne également un procédé de gestion de l'énergie dans un véhicule, et le dispositif configuré pour la mise en œuvre d'un tel procédé.

L'invention concerne également un système comprenant un ou plusieurs véhicules, par exemple automobile ou plus généralement un véhicule à moteur terrestre, communiquant avec un ou plusieurs serveurs ou dispositifs du réseau tel que le dispositif 2.

## Revendications

1. Procédé de communication entre un système de communication d'un véhicule (10) et un réseau mobile terrestre public (100), ledit véhicule (10) étant statique dans une cellule dudit réseau (100), ledit procédé étant mis en œuvre par ledit réseau (100), ledit procédé comprenant les étapes suivantes :
- réception (31) d'une première information représentative de consommation électrique dudit véhicule (10) ;
- réception (32) d'une deuxième information représentative d'une quantité d'électricité disponible dans ledit véhicule (10) ;
- réception (33) d'une troisième information représentative d'un objectif de maintien d'une connexion entre ledit système de communication et ledit réseau pendant une durée déterminée ;
- détermination (34) d'au moins un mode d'économie d'énergie à allouer audit système de communication du véhicule (10) en fonction de ladite première information, ladite deuxième information et ladite troisième information ;
- transmission (35), à destination dudit système de communication du véhicule (10), d'une instruction de passage audit au moins un mode d'économie d'énergie déterminé,
**caractérisé en ce que**
ladite détermination d'au moins un mode d'économie d'énergie comprend une sélection d'un profil d'économie d'énergie parmi une pluralité de profils d'économie d'énergie, à chaque profil de ladite pluralité étant associé un ensemble d'applications et/ou de services à maintenir en activité avec un ensemble de paramètres de communication associés, ledit ensemble de paramètres de communication comprenant :
- une fréquence d'échanges de données ; et/ou
- une taille de paquets de données.

2. Procédé selon la revendication 1, pour lequel ladite détermination d'au moins un mode d'économie d'énergie comprend une sélection d'un mécanisme de mise en sommeil dudit système de communication du véhicule (10) à intervalle régulier de durée déterminée parmi une pluralité de mécanismes supportés par ledit réseau (100).

3. Procédé selon la revendication 2, pour lequel ladite pluralité de mécanismes comprend :
- mécanisme de mode d'économie d'énergie, dit PSM ;
- mécanisme de réception discontinue, dit DRX ;
- mécanisme de réception discontinue étendue, dit eDRX ;
- mécanisme de réception discontinue en mode connecté, dit CDRX.

4. Procédé selon l'une des revendications précédentes, pour lequel ladite pluralité de profils d'économie d'énergie comprend un profil pour lequel uniquement un ou plusieurs services d'urgence sont maintenus en activité.

5. Procédé selon l'une des revendications précédentes, pour lequel ladite sélection d'un profil d'économie d'énergie est fonction d'une image virtuelle dudit système de communication dudit véhicule (10) enregistrée dans ledit réseau.

6. Dispositif (2) compris dans un réseau mobile terrestre public, ledit dispositif (2) comprenant une mémoire (21) associée à au moins un processeur (20) configuré pour la mise en œuvre des étapes du procédé selon l'une quelconque des revendications 1 à 5.

7. Système de communication comprenant le dispositif selon la revendication 6 et au moins un véhicule relié audit réseau mobile terrestre public via une liaison sans fil.

8. Produit programme d'ordinateur comportant des instructions adaptées pour l'exécution des étapes du procédé selon l'une des revendications 1 à 5, lorsque le programme d'ordinateur est exécuté par au moins un processeur.

## Patentansprüche

1. Ein Verfahren zur Kommunikation zwischen einem Kommunikationssystem eines Fahrzeugs (10) und einem öffentlichen terrestrischen Mobilfunknetz (100), wobei sich das Fahrzeug (10) in einer Zelle des Netzes (100) befindet und das Verfahren vom Netz (100) implementiert wird, umfasst die folgenden Schritte:
- Empfangen (31) einer ersten Information, die den Stromverbrauch des Fahrzeugs (10) darstellt;
- Empfangen (32) einer zweiten Information, die die im Fahrzeug (10) verfügbare Strommenge darstellt;
- Empfangen (33) einer dritten Information, die das Ziel der Aufrechterhaltung einer Verbindung zwischen dem Kommunikationssystem und dem Netz für einen bestimmten Zeitraum darstellt;
- Bestimmen (34) mindestens eines Energiesparmodus, der dem Kommunikationssystem des Fahrzeugs (10) auf der Grundlage der ersten, zweiten und dritten Information zugewiesen werden soll;
- Übermittlung (35) an das Fahrzeugkommunikationssystem (10) einer Anweisung zum Umschalten auf den mindestens einen festgelegten Energiesparmodus,
**dadurch gekennzeichnet, dass** die Festlegung des mindestens einen Energiesparmodus die Auswahl eines Energiesparprofils aus einer Vielzahl von Energiesparprofilen umfasst, wobei jedem Profil dieser Vielzahl eine Reihe von Anwendungen und/oder Diensten zugeordnet ist, die in Betrieb gehalten werden sollen, sowie eine Reihe zugehöriger Kommunikationsparameter, wobei diese Reihe von Kommunikationsparametern Folgendes umfasst:
- eine Datenaustauschfrequenz; und/oder
- eine Datenpaketgröße.

2. Verfahren nach Anspruch 1, wobei die Bestimmung mindestens eines Energiesparmodus die Auswahl eines Schlafmechanismus für das Fahrzeugkommunikationssystem (10) in regelmäßigen Abständen von bestimmter Dauer aus einer Vielzahl von Mechanismen umfasst, die vom Netzwerk (100) unterstützt werden.

3. Verfahren nach Anspruch 2, wobei die Vielzahl von Mechanismen Folgendes umfasst:
- Energiesparmodus-Mechanismus, genannt PSM;
- diskontinuierlicher Empfangsmechanismus, genannt DRX;
- erweiterter diskontinuierlicher Empfangsmechanismus, genannt eDRX ;
- diskontinuierlicher Empfangsmechanismus im verbundenen Modus, genannt CDRX.

4. Verfahren nach einem der vorhergehenden Ansprüche, wobei die Vielzahl von Energiesparprofilen ein Profil umfasst, in dem nur ein oder mehrere Notdienste in Betrieb gehalten werden.

5. Verfahren nach einem der vorhergehenden Ansprüche, wobei die Auswahl eines Energiesparprofils eine Funktion eines virtuellen Abbildes des Kommunikationssystems des Fahrzeugs (10) ist, das in dem Netzwerk aufgezeichnet ist.

6. Vorrichtung (2) in einem öffentlichen terrestrischen Mobilfunknetz, wobei die Vorrichtung (2) einen Speicher (21) umfasst, der mit mindestens einem Prozessor (20) verbunden ist, der für die Durchführung der Schritte des Verfahrens gemäß einem der Ansprüche 1 bis 5 konfiguriert ist.

7. Kommunikationssystem, umfassend die Vorrichtung nach Anspruch 6 und mindestens ein Fahrzeug, das über eine drahtlose Verbindung mit dem öffentlichen terrestrischen Mobilfunknetz verbunden ist.

8. Produktcomputerprogramm mit Anweisungen, die zur Durchführung der Verfahrensschritte gemäß einem der Ansprüche 1 bis 5 geeignet sind, wenn das Computerprogramm von mindestens einem Prozessor ausgeführt wird.

## Claims

1. A method for communication between a vehicle communication system (10) and a public terrestrial mobile network (100), said vehicle (10) being stationary within a cell of said network (100), said method being implemented by said network (100), said method comprising the following steps:
- receiving (31) a first piece of information representing the electrical consumption of said vehicle (10);
- receiving (32) a second piece of information representing the amount of electricity available in said vehicle (10);
- receiving (33) a third piece of information representing the objective of maintaining a connection between said communication system and said network for a specified duration;
- determining (34) at least one energy-saving mode to be allocated to said vehicle communication system (10) based on said first, second, and third pieces of information;
- transmitting (35) to said vehicle communication system (10) an instruction to switch to said at least one specified energy-saving mode.
**characterized in that** said determination of at least one energy saving mode includes a selection of an energy saving profile from a plurality of energy saving profiles, to each profile of said plurality being associated a set of applications and/or services to be kept in operation with a set of associated communication parameters, said set of communication parameters comprising:
- a data exchange frequency; and/or
- a data packet size .

2. Method according to claim 1, wherein said determination of at least one energy saving mode comprises a selection of a sleep mechanism for said vehicle communication system (10) at regular intervals of determined duration from among a plurality of mechanisms supported by said network (100).

3. A method according to claim 2, wherein said plurality of mechanisms comprises:
- energy saving mode mechanism, called PSM;
- discontinuous reception mechanism, called DRX;
- extended discontinuous reception mechanism, called eDRX ;
- discontinuous reception mechanism in connected mode, called CDRX.

4. A method according to any one of the preceding claims, wherein said plurality of energy saving profiles includes a profile in which only one or more emergency services are kept in operation.

5. A method according to any one of the preceding claims, wherein said selection of an energy saving profile is a function of a virtual image of said communication system of said vehicle (10) recorded in said network.

6. Device (2) included in a public terrestrial mobile network, said device (2) comprising a memory (21) associated with at least one processor (20) configured for carrying out the steps of the method according to any one of claims 1 to 5.

7. Communication system comprising the device according to claim 6 and at least one vehicle connected to said public terrestrial mobile network via a wireless link.

8. Product computer program comprising instructions adapted for carrying out the steps of the process according to any one of claims 1 to 5, when the computer program is executed by at least one processor.
